# EUROPEAN PATENT APPLICATION

(11) **EP 1 357 311 A2**
(43) Date of publication of application: **29.10.2003**
(21) Application number: 03252601.4
(22) Date of filing: 24.04.2003
(51) Int. Cl.: F16D 69/02

(54) **Non-asbestos friction materials**

(30) Priority: 24.04.2002 JP 2002122297
(71) Applicant: NISSHINBO INDUSTRIES, INC., Chuo-ku, Tokyo (JP)
(72) Inventor: Ohe, Takayuki, c/o Tatebayashi Plant, Nisshinbo, Oura-gun, Gunma-ken (JP); Namba, Masahiro, c/o Tatebayashi Plant, Nisshinbo, Oura-gun, Gunma-ken (JP)
(74) Representative: Stuart, Ian Alexander

(57) **Abstract**

A non-asbestos friction material is made by molding and curing a composition primarily comprising a fibrous base excluding asbestos, a binder, a filler, and at least three metal sulfides excluding titanium sulfide, complex metal sulfides and being free of antimony and lead compounds. This friction material has minimized metal catch and improved wear resistance, both in the high-temperature region. Absent lead and antimony compounds, the friction material is friendly to the environment.

## Description

### TECHNICAL FIELD

This invention relates to non-asbestos friction materials, e.g. for use as disk pads, brake linings and clutch facings in automobiles and the like, and preferably, to such non-asbestos friction materials featuring effective prevention of "metal catch" and reduced environment loads.

### BACKGROUND ART

In non-asbestos friction materials for use as disk pads and brake linings in automobiles and the like, it is a common practice to incorporate graphite and molybdenum disulfide for the purpose of improving wear resistance. It is also well known that lead and antimony compounds such as lead sulfide, antimony oxide and antimony sulfide are effective for restraining deterioration of opposing surface attack by "metal catch" occurring in the high-temperature region. The increasing concerns about the environmental problem, however, recommend to refrain from using the lead and antimony compounds.

Also, use of metal sulfides as solid lubricants is known in the art (see JP-A 54-160, JP-A 54-109013, JP-A 4-311789, JP-A 7-83256, JP-A 10-511732 and USP 6,228,815). These approaches, however, fail to effectively prevent the "metal catch," specifically in the high-temperature region of higher than about 300°C, especially higher than about 400°C. Therefore, there exists a need for a technique of providing wear resistance and the effect of restraining opposing surface attack by metal catch in the high-temperature region, without resorting to lead and antimony compounds.

### SUMMARY OF THE INVENTION

A preferred embodiment of the present invention is a non-asbestos friction material which has minimized "metal catch" and improved wear resistance, both in the high-temperature region, and is environmentally acceptable.

It has been found that by incorporating in a friction material composition at least three metal sulfides excluding antimony sulfide, lead sulfide, titanium sulfide and complex metal sulfides, it is possible to obtain a non-asbestos friction material which has minimized "metal catch" in the high-temperature region and improved wear resistance in the high-temperature region.

The present invention provides a non-asbestos friction material made by molding and curing a composition primarily comprising a fibrous base excluding asbestos, a binder and a filler. The composition further comprises at least three metal sulfides excluding titanium sulfide and complex metal sulfides, and is free of antimony and lead compounds.

### DESCRIPTION OF THE PREFERRED EMBODIMENTS

The non-asbestos friction material of the invention can be made by molding and curing a composition composed primarily of a fibrous base, a binder, and a filler.

The fibrous base may be any organic fiber or inorganic fiber other than asbestos that is commonly used in friction materials. Illustrative examples of suitable materials include organic fibers such as nylon, polyester, rayon, phenolic fibers, and aramid fibers; and inorganic fibers such as glass fibers, rock wool, ceramic fibers and metal fibers (e.g., iron, copper, brass, bronze, and aluminum). These may be used alone or in combination of any.

The fibrous base is preferably used in an amount of 2 to 30% by volume, and more preferably 10 to 20% by volume, based on the overall friction material composition. Since a higher content of metal fibers is likely to cause "metal catch," the amount of metal fibers, if used as the fibrous base, should preferably be limited to 10% by volume or less based on the overall friction material composition.

The binder may be any known binder commonly used in friction materials. Illustrative examples include phenolic resins, melamine resins, epoxy resins, various modified phenolic resins such as epoxy-modified phenolic resins, oil-modified phenolic resins, alkylbenzene-modified phenolic resins, and cashew-modified phenolic resins, and acrylonitrile-butadiene copolymers (NBR), which may be used alone or in admixture of any. The binder is preferably used in an amount of 5 to 30% by volume, more preferably 10 to 25% by volume, based on the overall friction material composition.

Examples of suitable fillers include organic fillers such as various rubber powders (e.g., rubber dust and ground tire rubber), cashew dust and melamine dust, and inorganic fillers such as calcium carbonate, barium sulfate, magnesium oxide, graphite, calcium hydroxide, zirconium silicate, iron oxide, mica, zirconium oxide, metal powders, quartz, silica, alumina, chromium oxide, and vermiculite. These fillers may be used alone or as combinations of two or more thereof.

The amount of such filler is preferably from 25 to 85% by volume, and more preferably from 45 to 80% by volume, based on the overall frictional material composition. More specifically, the organic filler is preferably compounded in an amount of 10 to 40% by volume and the inorganic filler preferably compounded in an amount of 10 to 70% by volume.

According to the invention, at least three types, especially at least four types of metal sulfide are compounded in the frictional material composition. A choice is made from many metal sulfides excluding antimony sulfide, lead sulfide, titanium sulfide and complex metal sulfides (or compound metal sulfides).

In a preferred embodiment, at least three metal sulfides, especially at least four metal sulfides are selected from among zinc sulfide, copper sulfide, bismuth sulfide, tin sulfide, iron sulfide, manganese sulfide and molybdenum sulfide. In a more preferred embodiment, three or four metal sulfides are selected from among copper sulfide, bismuth sulfide, iron sulfide, and tin sulfide.

From the environmental load standpoint, the present invention excludes the use of antimony compounds such as antimony sulfide and lead compounds such as lead sulfide. Titanium sulfide and complex metal sulfides are also excluded from the family of at least three metal sulfides useful in the invention because of their lack of effectiveness although it is acceptable to use titanium sulfide or complex metal sulfides in addition to the at least three metal sulfides.

The at least three metal sulfides are compounded in a total amount of 1 to 8% by volume based on the entire friction material composition. While the total amount is set within this range, the amount of an individual metal sulfide is preferably 0.2 to 7.6% by volume of the composition. Too small a total amount of the metal sulfides may be ineffective and allow a metal catch to occur whereas too large a total amount may reduce the coefficient of friction of a friction material below the practically acceptable level.

It is noted that the filler and the metal sulfides used herein preferably have a lower hardness than the Mohs hardness (4.5) of cast iron. Since the opposing surface with which the friction material comes in contact, such as disk rotors and brake drums are generally made of cast iron, the friction material loaded with a filler and metal sulfides having a higher Mohs hardness has an increased opposing surface attack so that it excessively abrades the opposing surface, often inviting metal catch.

The method of making the non-asbestos friction material of the invention involves uniformly blending predetermined amounts of the above-described fibrous base, binder and filler in a suitable mixer such as a Henschel mixer, Loedige mixer or Eirich mixer, and preforming the blend in a mold. The preform is then molded at a temperature of 130 to 200°C and a pressure of 100 to 1,000 kg/cm² (98×10⁵ to 980×10⁵ Pa) for a period of 2 to 15 minutes. The resulting molded article is typically postcured by heat treatment at 140 to 250°C for a period of 2 to 48 hours, then spray-painted, baked and surface-ground as needed to give the finished article.

When it is desired to manufacture disk pads or linings for automobiles, the preform is placed on an iron or aluminum plate which has been cleaned, surface treated and coated with an adhesive. In a suitable mold, the preform on the iron or aluminum plate is molded, heat treated, spray-painted, baked and surface-ground to give the finished article.

The non-asbestos friction material of the invention can be used in a variety of related applications, including disk pads, brake shoes, and brake linings for automobiles, large trucks, railroad cars and various types of industrial machinery.

### EXAMPLE

Examples and comparative examples are given below by way of illustration, and are not intended to limit the invention.

### Examples 1-5 & Comparative Examples 1-6

Friction material compositions formulated as shown in Table 1 were uniformly blended in a Loedige mixer and preformed in a pressure mold under a pressure of 100 kg/cm² (98×10⁵ Pa) for 1 minute. The preforms were molded for 10 minutes at a temperature of 160°C and a pressure of 250 kg/cm² (245×10⁵ Pa), then postcured by 5 hours of heat treatment at 200°C, yielding friction members in each example. The friction members were examined for wear depth and metal catch (opposing surface attack) by the following tests. The results are shown in Table 1.

### Wear test (according to JASO C427)

The depth of wear in the friction member was measured under conditions: an initial braking speed of 50 km/h, a braking deceleration of 0.3 G, appropriate cycles of braking, and a brake temperature prior to braking of 100°C, 200°C, 300°C or 400°C. The depth of wear was converted to a depth of wear per 10,000 cycles of braking.

### Metal catch

In the wear test, the metal catch on the friction member was observed whenever the depth of wear at different temperature was measured. The member was rated according to the following criterion.
ⓞ = excellent: no metal catch
○ = good: a few small metal catches with less than 3 mm diameter
Δ = acceptable: many small metal catches
× = poor: large metal catches with more than 5 mm diameter

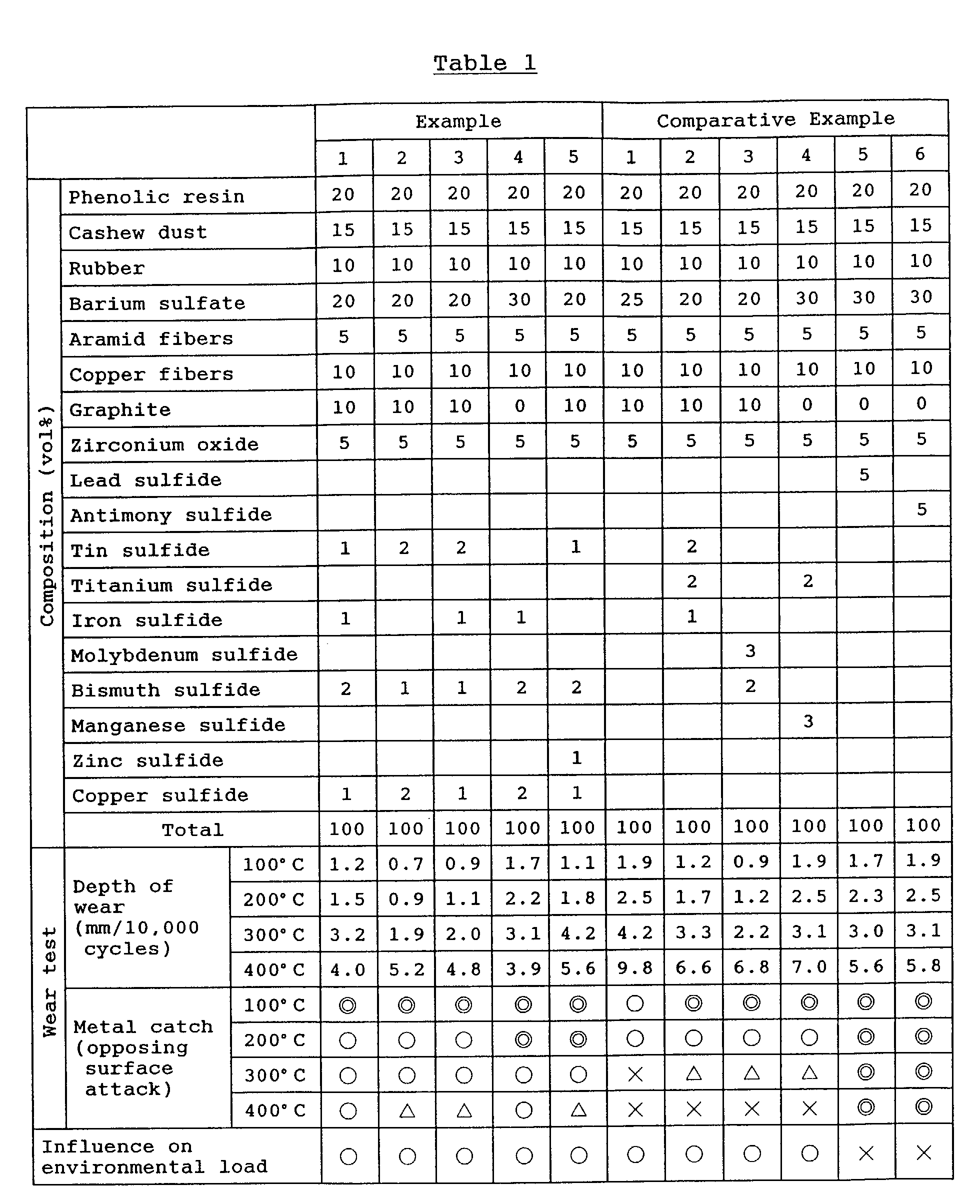

There has been described a non-asbestos friction material which causes minimal metal catch in the high-temperature region and has improved wear resistance in the high-temperature region. Absent lead and antimony compounds, the friction material is friendly to the environment.

Japanese Patent Application No. 2002-122297 is incorporated herein by reference.

Although some preferred embodiments have been described, many modifications and variations may be made thereto in light of the above teachings. It is therefore to be understood that the invention may be practiced otherwise than as specifically described without departing from the scope of the appended claims.

## Claims

1. A non-asbestos friction material made by molding and curing a composition comprising a fibrous base excluding asbestos, a binder and a filler, said composition further comprising at least three metal sulfides excluding titanium sulfide and complex metal sulfides, and being free of antimony and lead compounds.

2. The non-asbestos friction material of claim 1 wherein the composition comprises at least three metal sulfides selected from the group consisting of zinc sulfide, copper sulfide, bismuth sulfide, tin sulfide, iron sulfide, manganese sulfide and molybdenum sulfide.

3. The non-asbestos friction material of claim 2 wherein the composition comprises three or four metal sulfides selected from the group consisting of copper sulfide, bismuth sulfide, iron sulfide, and tin sulfide.

4. A friction member comprising a friction material according to any preceding claim.

5. A friction member according to claim 4 which is a disk pad, brake shoe or brake lining.

6. A brakings assembly comprising a friction member according to claim 4 or claim 5, an opposing surface member comprising cast iron, and means for urging the friction member and the opposing surface member together so that the friction material contacts a cast iron surface of the surface member.
